# EUROPEAN PATENT APPLICATION

(11) **EP 4 351 266 A1**
(43) Date of publication of application: **10.04.2024**
(21) Application number: 22836814.8
(22) Date of filing: 01.07.2022
(51) Int. Cl.: H04W 76/19

(54) **METHOD AND APPARATUS FOR OPTIMIZING CHO CONFIGURATION INFORMATION**

(30) Priority: 07.07.2021 CN 202110768494
(71) Applicant: Vivo Mobile Communication Co., Ltd., Dongguan, Guangdong 523863 (CN)
(72) Inventor: WEN, Ming, Dongguan, Guangdong 523863 (CN); PAN, Xiang, Dongguan, Guangdong 523863 (CN); BOUBACAR, Kimba Dit Adamou, Dongguan, Guangdong 523863 (CN)
(74) Representative: Murgitroyd & Company
(86) International application number: PCT/CN2022/103291
(87) International publication number: WO 2023/280063

(57) **Abstract**

This application discloses a method and an apparatus for optimizing CHO configuration information, and pertains to the field of communication technologies. The method for optimizing CHO configuration information in embodiments of this application includes: sending, by a source network side device, conditional handover CHO configuration information to a terminal; receiving, by the source network side device, first indication information, where the first indication information includes a radio link failure RLF report; and optimizing, by the source network side device, CHO configuration information corresponding to the terminal according to the first indication information.

## Description

### CROSS-REFERENCE TO RELATED APPLICATION

This application claims priority to Chinese Patent Application No. 202110768494.8, filed on July 7, 2021 and entitled "METHOD AND APPARATUS FOR OPTIMIZING CHO CONFIGURATION INFORMATION", which is incorporated herein by reference in its entirety.

### TECHNICAL FIELD

This application pertains to the field of communication technologies, and specifically relates to a method and an apparatus for optimizing CHO configuration information.

### BACKGROUND

In a process in which a terminal performs CHO (Conditional Handover, conditional handover), if an RLF (Radio Link Failure, Radio Link Failure) occurs between the terminal and a cell, the terminal needs to report some related information to a network side device, and the network side device analyzes whether a parameter of a CHO execution condition configured for the terminal and a configured CHO candidate cell list is reasonable, so that the network side device optimizes CHO configuration information, thereby improving a success probability of handover of the terminal.

However, in the CHO process or after the CHO process (for example, an RLF occurs after the terminal is handed over to a CHO candidate cell), it is difficult for the terminal to determine to send related information of updating a CHO configuration to the corresponding network side device that needs to update the CHO configuration information. Consequently, a success rate of updating the CHO configuration information is not high.

### SUMMARY

Embodiments of this application provide a method and an apparatus for optimizing CHO configuration information, to resolve a technical problem in the prior art that a success probability of updating CHO configuration information is not high.

According to a first aspect, a method for optimizing CHO configuration information is provided, and the method includes:
sending, by a source network side device, conditional handover CHO configuration information to a terminal;
receiving, by the source network side device, first indication information, where the first indication information includes a radio link failure RLF report; and
optimizing, by the source network side device, CHO configuration information corresponding to the terminal according to the first indication information.

According to a second aspect, a method for processing CHO configuration information is provided, and the method includes:
receiving, by a target network side device, a radio resource control RRC message sent by a terminal;
obtaining, by the target network side device, a radio link failure RLF report according to the RRC message; and
sending, by the target network side device, first indication information to a source network side device, where
the first indication information is used to instruct the source network side device to optimize conditional handover CHO configuration information corresponding to the terminal.

According to a third aspect, a method for triggering optimization of CHO configuration information is provided, and the method includes:
receiving, by a terminal, conditional handover CHO configuration information sent by a source network side device; and
sending, by the terminal, a radio resource control RRC message to a target network side device when the terminal encounters a radio link failure RLF, where
the RRC message includes at least one of RLF indication information and an RLF report, and the RLF indication information and the RLF report are used to instruct to optimize CHO configuration information.

According to a fourth aspect, an apparatus for optimizing CHO configuration information is provided, and the apparatus includes:
a configuration module, configured to send conditional handover CHO configuration information to a terminal;
a receiving module, configured to receive first indication information, where the first indication information includes a radio link failure RLF report; and
an optimization module, configured to optimize CHO configuration information corresponding to the terminal according to the first indication information.

According to a fifth aspect, an apparatus for processing CHO configuration information is provided, and the apparatus includes:
a receiving module, configured to receive a radio resource control RRC message sent by a terminal;
an obtaining module, configured to obtain a radio link failure RLF report according to the RRC message; and
a sending module, configured to send first indication information to a source network side device, where
the first indication information is used to instruct the source network side device to optimize conditional handover CHO configuration information corresponding to the terminal.

According to a sixth aspect, an apparatus for triggering optimization of CHO configuration information is provided, and the apparatus includes:
a receiving module, configured to receive conditional handover CHO configuration information sent by a source network side device; and
a sending module, configured to send a radio resource control RRC message to a target network side device when the terminal encounters a radio link failure RLF, where
the RRC message includes at least one of RLF indication information and an RLF report, and the RLF indication information and the RLF report are used to instruct to optimize CHO configuration information.

According to a seventh aspect, a terminal is provided. The terminal includes a processor, a memory, and a program or an instruction stored in the memory and executable on the processor, and the program or the instruction is executed by the processor to implement the steps of the method according to the third aspect.

According to an eighth aspect, a terminal is provided, including a processor and a communication interface, where the communication interface is configured to: receive conditional handover CHO configuration information sent by a source network side device; and send a radio resource control RRC message to a target network side device when the terminal encounters a radio link failure RLF.

According to a ninth aspect, a network side device is provided. The network side device includes a processor, a memory, and a program or an instruction stored in the memory and executable on the processor, and the program or the instruction is executed by the processor to implement the steps of the method according to the first aspect or the second aspect.

According to a tenth aspect, a network side device is provided, including a processor and a communication interface, where the processor and/or the communication interface are/is configured to implement the steps of the method according to the first aspect or the second aspect.

According to an eleventh aspect, a readable storage medium is provided. The readable storage medium stores a program or an instruction, and the program or the instruction is executed by a processor to implement the steps of the method according to the first aspect, the second aspect, or the third aspect.

According to a twelfth aspect, a chip is provided. The chip includes a processor and a communication interface, the communication interface is coupled to the processor, and the processor is configured to run a program or an instruction to implement the steps of the method according to the first aspect, or the steps of the method according to the second aspect, or the steps of the method according to the third aspect.

According to a thirteenth aspect, a computer program/program product is provided. The computer program/program product is stored in a non-transient storage medium, and the program/program product is executed by at least one processor to implement the steps of the method according to the first aspect, the steps of the method according to the second aspect, or the steps of the method according to the third aspect.

According to the method and the apparatus for optimizing CHO configuration information provided in the embodiments of this application, a source network side device can finally successfully receive an RLF report, and can optimize CHO configuration information corresponding to a terminal based on the RLF report, to update the CHO configuration information, thereby effectively improving a success rate of updating CHO configuration information compared with the prior art.

### BRIEF DESCRIPTION OF DRAWINGS

FIG. 1 is a structural diagram of a wireless communication system applicable to embodiments of this application;
FIG. 2 is a schematic flowchart of a method for optimizing CHO configuration information according to an embodiment of this application;
FIG. 3 is a schematic flowchart of a method for processing CHO configuration information according to an embodiment of this application;
FIG. 4 is a schematic flowchart of a method for triggering optimization of CHO configuration information according to an embodiment of this application;
FIG. 5 is a schematic structural diagram of an apparatus for optimizing CHO configuration information according to an embodiment of this application;
FIG. 6 is a schematic structural diagram of an apparatus for processing CHO configuration information according to an embodiment of this application;
FIG. 7 is a schematic structural diagram of an apparatus for triggering optimization of CHO configuration information according to an embodiment of this application;
FIG. 8 is a schematic structural diagram of a communication device according to an embodiment of this application;
FIG. 9 is a schematic diagram of a hardware structure of a terminal according to an embodiment of this application; and
FIG. 10 is a schematic diagram of a hardware structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communication system.

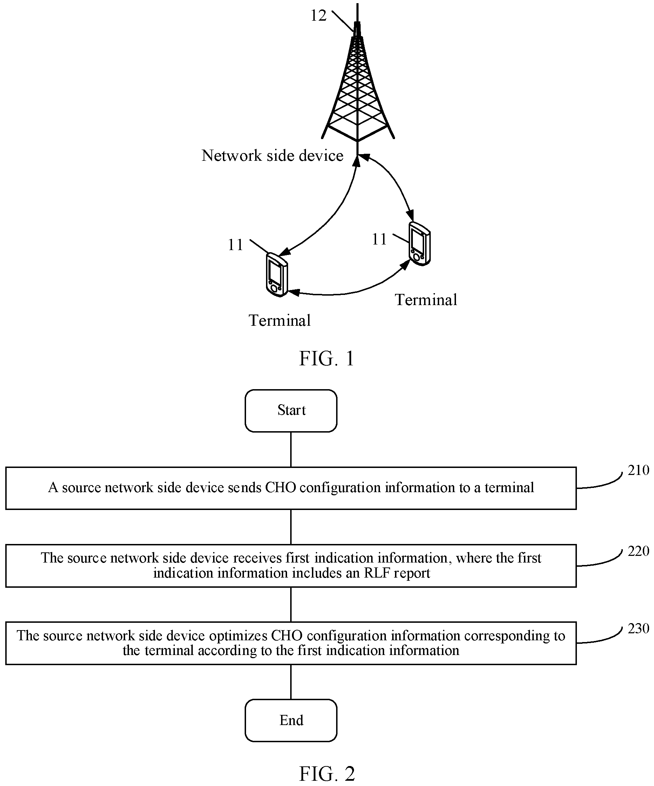

FIG. 1 is a structural diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a washing machine, or furniture), and the wearable device includes a smart watch, a smart band, a smart headset, smart glasses, smart jewelry (a smart bracelet, a smart chain bracelet, a smart ring, a smart necklace, a smart anklet, a smart ankle chain, and the like), a smart wrist strap, smart clothing, and the like. It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station a WLAN access node, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited. The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in an NR system is used as an example for description, and a specific type of the core network device is not limited.

In a process of discussing how to maintain context information of a terminal by using a network side method in the embodiments of the present invention, the following technical solutions are considered:

A source node sends a candidate cell list and a CHO execution condition to a target node by using an SN status transfer message or a new message, and then the target node sends the information back to the source node by using a handover report message.

An occasion at which the source node sends the candidate cell list and the CHO execution condition when an HO SUCCESS (handover success) message sent by the target node is received, and the source node releases the context information of the terminal after sending the information.

After obtaining an RLF report sent by the terminal, the target node sends the RLF report and CHO-related information to the source node by using Xn (for example, Handover Report, handover report) information. The source node adjusts a CHO configuration parameter and a cell according to the feedback.

In a specific scene, for example, in a scene 1, the following steps may be included:
(1) The source node delivers a CHO configuration to the terminal.
(2) The terminal encounters an RLF in a source cell, and recovers to a CHO candidate cell (scene 1a) or is reestablished to a third cell (a scene 1b).
(3) When the terminal recovers to the CHO candidate cell, the target cell sends an HO SUCCESS to notify the source node. If the terminal is reestablished to the third cell, the third cell does not notify the source node by using the HO SUCCESS because no handover process occurs. In addition, when establishing a connection to the target cell or the third cell, the terminal notifies the network that an RLF report is stored on the terminal side.
(4) a. After receiving the HO SUCCESS, the source node sends CHO-related information (a CHO candidate cell list + an execution condition) to a target base station.
(4) b. The target cell/the third cell may select, based on implementation, whether to obtain the RLF report on the terminal side. If the RLF report is obtained, the target cell sends the RLF report and the CHO-related information obtained in step (4) a to the source node together.
(5) After receiving the message, the source node optimizes a CHO parameter.

It can be learned that the foregoing solutions are only applicable to the scene 1a, because only when CHO is successfully performed, the source base station can know which base station is connected to the terminal (when the UE performs CHO successfully, that is, being handed over to the target base station, the target base station sends an HO SUCCESS message to the source base station through an Xn interface, so that the source base station can know a specific base station to which the CHO-related information is to be sent). However, when "the terminal is reestablished to the third cell (not a source cell or a CHO candidate cell)" in the scene 1b, the third cell does not send an HO SUCCESS to the source base station (because this is a reestablishment process rather than a handover process), so that the source base station cannot learn a specific base station to which the CHO-related information that currently needs to be sent. When the target base station sends an RLF report to the source base station, the source base station may have released a UE context, and therefore CHO parameter analysis cannot be performed.

In addition, in step (3) of the scene 1, if the target base station does not obtain the RLF report in a timely manner, the target base station needs to always store CHO-related information until the target base station obtains the RLF report; or the RLF report on the terminal side is not timely obtained by the target base station and is overwritten because a new RLF occurs (or is deleted after a storage time exceeds 48 hours). In this case, the target base station always stores CHO-related information, even if the corresponding RLF report is not obtained by the target base station.

With reference to the accompanying drawings, the following describes in detail the method and the apparatus for optimizing CHO configuration information provided in the embodiments of this application by using some embodiments and application scenes thereof.

Therefore, the foregoing solution has the foregoing problems: a. Because the target network side device does not know a type of the RLF report of the terminal (for example, CHO/HO (Handover, handover)/DAPS (Dual Active Protocol Stack, dual active protocol stack) handover/no RLF during handover), the RLF report cannot be obtained in time. b. In the foregoing scene 1b, the source base station cannot learn, by using the HO SUCCESS, a specific base station to which CHO-related information is sent.

FIG. 2 is a schematic flowchart of a method for optimizing CHO configuration information according to an embodiment of this application. Referring to FIG. 2, an embodiment of this application provides a method for optimizing CHO configuration information. The method may include:
Step 210: A source network side device sends CHO configuration information to a terminal.
Step 220: The source network side device receives first indication information, where the first indication information includes an RLF report.
Step 230: The source network side device optimizes CHO configuration information corresponding to the terminal according to the first indication information.

It should be noted that the method for optimizing CHO configuration information provided in this embodiment of this application may be performed by the source network side device. A cell corresponding to the source network side device may be a cell connected when the terminal receives a CHO configuration.

In step 210, the source network side device sends the CHO configuration information to the terminal.

After receiving the CHO configuration information sent by the source network side device, the terminal performs CHO according to the CHO configuration information. If the terminal encounters an RLF in a cell in a process of performing CHO (including before and after performing CHO according to the CHO configuration information), the terminal sends the RLF report to a corresponding network side device.

In step 220, the terminal may directly send the RLF report to the source network side device, or may send the RLF report to another network side device other than the source network side device.

It should be noted that if the terminal sends the RLF report to another network side device in the process of performing CHO, the another network side device finally sends the RLF report to the source network side device by using the first indication information, to ensure that the source network side device can receive the RLF report.

In step 230, the source network side device may optimize the CHO configuration information corresponding to the terminal according to the first indication information received in step 220.

According to the method for optimizing CHO configuration information provided in this embodiment of this application, a source network side device can finally successfully receive an RLF report, and can optimize CHO configuration information corresponding to a terminal based on the RLF report, to update the CHO configuration information, thereby effectively improving a success rate of updating CHO configuration information compared with the prior art.

In an embodiment, the receiving, by the source network side device, first indication information may include:
Scene 1: In a case that the terminal does not perform CHO and encounters an RLF in a first cell, the source network side device receives first indication information sent by a target network side device, where the first indication information includes a first RLF report.

For example, the terminal receives the CHO configuration information delivered by the source network side device, and encounters an RLF in the first cell before observing a cell that meets a CHO execution condition and is reestablished a specific cell or performs RLF recovery in a CHO candidate cell.

In this scene, the second cell includes the specific cell and the CHO candidate cell. The specific cell is a cell other than the first cell and the CHO candidate cell.

The first RLF report is sent when the terminal encounters an RLF in the first cell. The terminal sends the first RLF report to the target network side device when encountering an RLF in the first cell, and then the target network side device sends the first RLF report to the source network side device.

Scene 2: In a case that the terminal performs CHO to hand over from a first cell to a second cell and is reestablished to a third cell after encountering an RLF in the second cell, the source network side device receives first indication information sent by a target network side device, where the first indication information includes a second RLF report.

For example, the terminal receives a CHO configuration delivered by the source network side device, and selects the second cell that meets a CHO execution condition to successfully complete CHO. However, in a short time, the terminal encounters an RLF in the second cell and is successfully reestablished to the third cell.

The second RLF report is sent when the terminal encounters an RLF in the second cell. The terminal sends the second RLF report to the target network side device when encountering an RLF in the second cell, and then the target network side device sends the second RLF report to the source network side device.

Scene 3: In a case that the terminal performs CHO to hand over from a first cell to a second cell and is reestablished to the first cell after encountering an RLF in the second cell, the source network side device receives first indication information sent by the terminal, where the first indication information includes a second RLF report.

For example, the terminal receives a CHO configuration delivered by the source network side, and selects the second cell that meets a CHO execution condition to successfully complete CHO. However, in a short time, the terminal encounters an RLF in the second cell and is successfully reestablished to the first cell.

The first cell is a cell corresponding to the source network side device, the second cell is a cell corresponding to the target network side device, and the third cell is a cell corresponding to a third network side device.

The third network side device is a network side device that is different from the source network side device and the target network side device.

According to the method for optimizing CHO configuration information provided in this embodiment of this application, the first indication information can be received by the source network side device in different scenes, thereby further ensuring a success rate of updating CHO configuration information.

It should be noted that, for a CHO scene in an MDT (Minimization of Drive Tests, minimization of drive tests)/SON (Self-organizing Network, self-organizing network), it may be specified that the terminal needs to report some related information to a network side device, so that the network side device can analyze whether a parameter of a configured CHO execution condition and a configured CHO candidate cell list are reasonable. Further, the network side device may optimize these parameters, thereby improving a success probability of handover of the terminal.

Although the introduction of the MDT/SON can help the network to perform performance optimization, power consumption/storage of the terminal is also affected. Therefore, when the CHO scene in the standardized MDT/SON is optimized, impact on the terminal needs to be avoided as much as possible, that is, information that needs to be reported by the terminal to the network side needs to be reduced as much as possible. Information such as a CHO execution condition and a CHO candidate cell are stored in a terminal context (UE context) of a base station at present. Therefore, this part of information is known in advance to the network side device, that is, the terminal does not need to report this part of information when the terminal context is stored in the network side device.

However, the terminal context is not always reserved by the base station. According to a procedure of legacy (later), after the terminal encounters an RLF in a current serving cell, or after the terminal is successfully handed over to a target cell, the network side device reserves the terminal context for a period of time based on implementation, that is, a base station whose protocol is not standardized needs to forcibly reserve the terminal context in the foregoing case. A specific time for reserving the terminal context by the base station also depends on implementation of the base station.

Therefore, in a case that the network side device cannot always reserve the terminal context, a solution of how the network side device processes the terminal context needs to be provided.

In an embodiment, before the receiving, by the source network side device, first indication information, the method further includes:
receiving, by the source network side device, a first notification message sent by a target network side device; and
sending, by the source network side device, CHO-related information to the target network side device according to the first notification message, where
the CHO-related information includes at least one of the following:
   terminal context information including the CHO configuration information corresponding to the terminal; and
   the CHO configuration information corresponding to the terminal, where
   the CHO configuration information corresponding to the terminal includes at least one of the following:
      a CHO execution condition configured by the source network side device for the terminal; and
      a CHO candidate cell list configured by the source network side device for the terminal.

For example, when the terminal encounters an RLF in the first cell and is handed over to the second cell (a cell in the CHO candidate cell list) (that is, a scene 1), the terminal sends the RLF report to the target network side device (a network side device corresponding to the second cell), and the target network side device sends the first notification message, for example, an Xn message such as an HO SUCCESS (handover success) message, to the source network side device, to instruct the source network side device to send the CHO-related information to a specific network side device.

For example, when the terminal is handed over from the first cell to the second cell, and encounters an RLF in the second cell and is reestablished to the third cell (a cell other than a source cell and a CHO candidate cell) (that is, a scene 2), the terminal sends the RLF report to the target network side device (a network side device corresponding to the third cell), and the target network side device determines an ID of the source network side device according to information about a network side device corresponding to the first cell that is connected to the terminal when an RLC occurs in the RLF report, to send the first notification message, for example, an Xn message such as a failure indication (failure indication) message, to the source network side device according to the ID, to instruct the source network side device to send the CHO-related information to a specific network side device.

Optionally, the sending, by the source network side device, CHO-related information to the target network side device according to the first notification message may include:
determining, by the source network side device, an ID of the target network side device according to the first notification message; and
sending, by the source network side device, the CHO-related information to the target network side device according to the ID of the target network side device.

The ID of the target network side device in the first notification message is identified, so that the source network side device can quickly and efficiently determine a specific network side device to which the CHO-related information needs to be sent.

It should be noted that when the terminal is handed over to the second cell, the target network side device (a network side device corresponding to the second cell) sends an HO SUCCESS message to the source network side device due to the handover process. When the terminal is reestablished to the third cell, because no handover process occurs, the target network side device (a network side device corresponding to the third cell) cannot notify the source network side device by using the HO SUCCESS message. Therefore, in this case, the source network side device cannot determine a specific network side device to which the CHO-related information needs to be sent.

However, the first notification message sent by the target network side device (a network side device corresponding to the third cell) is received when the terminal encounters an RLF in the first cell and is reestablished to the third cell. The source network side device may determine, according to the first notification message, a specific network side device to which the CHO-related information needs to be sent, to ensure that CHO configuration information is updated, thereby improving a success rate of updating CHO configuration information.

In an embodiment, the first indication information further includes at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

It should be noted that when the source network side device receives the RLF report, if the CHO-related information is locally stored, the source network side device directly optimizes the CHO configuration information corresponding to the terminal in the CHO-related information according to the RLF report.

In a case that the source network side device sends the CHO-related information to the target network side device, to optimize the CHO configuration information, the source network side device needs to receive the RLF report from the target network side device and at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

For example, the target network side device may send the RLF report and at least one of the foregoing information to the source network side device by using the first indication information, for example, an Xn message such as a handover report.

After receiving the first indication information sent by the target network side device, the source network side device may optimize the CHO configuration information corresponding to the terminal according to the first indication information.

According to the method for optimizing CHO configuration information provided in this embodiment of this application, in a case that a source network side device sends CHO-related information to a target network side device, first indication information that includes an RLF report and the CHO-related information and that is returned by the target network side device is received, to ensure that CHO configuration information can still be updated in this case, thereby improving a success rate of updating CHO configuration information.

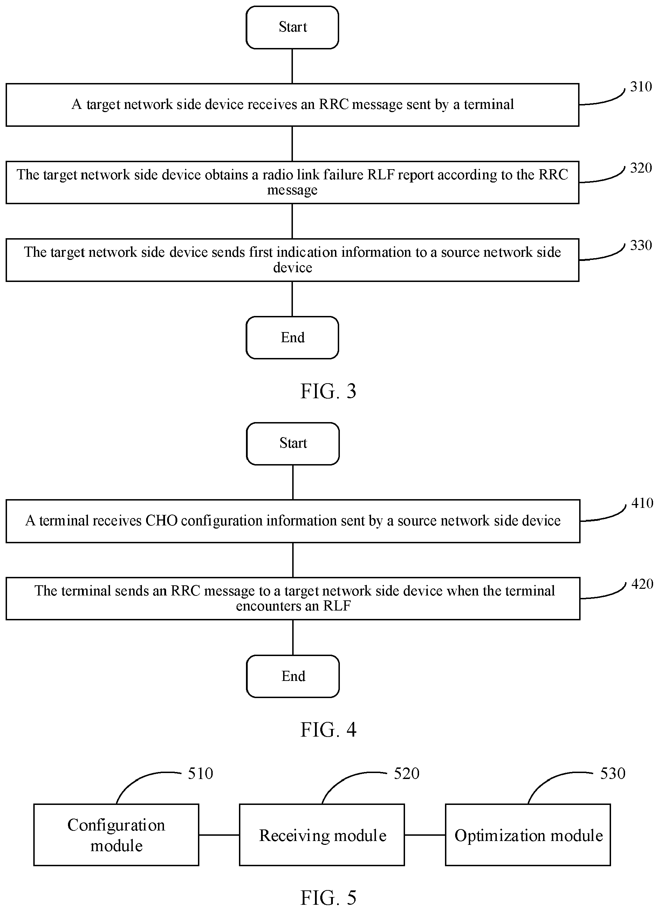

FIG. 3 is a schematic flowchart of a method for processing CHO configuration information according to an embodiment of this application. Referring to FIG. 3, an embodiment of this application provides a method for processing CHO configuration information. The method may include:
Step 310: A target network side device receives an RRC (Radio Resource Control, radio resource control) message sent by a terminal.
Step 320: The target network side device obtains a radio link failure RLF report according to the RRC message.
Step 330: The target network side device sends first indication information to a source network side device.

The first indication information is used to instruct the source network side device to optimize CHO configuration information corresponding to the terminal.

It should be noted that the method for processing CHO configuration information provided in this embodiment of this application may be performed by the target network side device. A cell corresponding to the target network side device may be any one of the following:
a first target cell, where the first target cell is a cell that remains connected after the terminal performs cell handover or RLF recovery, and the target cell is a cell in a CHO candidate cell; and
a second target cell, where the second target cell is a cell other than the cell corresponding to the source network side device and the first target cell.

In step 310, the target network side device may receive the RRC message sent by the terminal, where the RRC message is used to instruct the target network side device to obtain the RLF report.

In step 320, the target network side device may obtain the RLF report according to the RRC message.

The RRC message may include at least one of RLF indication information and an RLF report.

When the RRC message includes the RLF indication information, the target network side device needs to initiate a process of obtaining the RLF report, to obtain the RLF report as soon as possible.

When the RRC message includes the RLF report, the target network side device may directly obtain the RLF report.

After the RLF report is obtained, the target network side device may send the first indication information to the source network side device in step 330.

The first indication information is used to instruct the source network side device to optimize the CHO configuration information corresponding to the terminal, and includes the RLF report.

According to the method for processing CHO configuration information provided in this embodiment of this application, after obtaining an RLF report, a target network side device sends first indication information to a source network side device to instruct the source network side device to optimize CHO configuration information corresponding to a terminal, to ensure that the terminal can obtain updated CHO configuration information when encountering an RLF in a CHO process, thereby effectively improving a success rate of updating CHO configuration information compared with the prior art.

In an embodiment, the RRC message includes at least one of RLF indication information and an RLF report; and
the obtaining, by the target network side device, an RLF report according to the RRC message may include:
in a case that the RRC message includes the RLF report, obtaining, by the target network side device, the RLF report; or
in a case that the RRC message does not include the RLF report, sending, by the target network side device, second indication information to the terminal according to the RLF indication information, where the second indication information is used to instruct the terminal to send the RLF report to the target network side device; and
receiving, by the target network side device, the RLF report, where
the RLF indication information indicates that the RLF report is related to CHO.

Optionally, when the RRC message directly carries the RLF report, the target network side device may directly obtain the RLF report from the RRC message sent by the terminal instead of sending any request information to the terminal, thereby reducing a quantity of times of interaction and improving efficiency of obtaining the RLF report.

When the RRC message includes the RLF indication information, the RLF indication information may be implemented by a first indication field. When the first indication field is present, it may indicate that the RLF report is related to CHO. When the first indication field is not present, it indicates that the RLF report is not related to CHO. For example, in this case, the RLF report may be related to DAPS (Dual Active Protocol Stack, dual active protocol stack) handover, HO (Handover, Handover), a common RLF, or the like.

Optionally, when the RRC message sent by the terminal to the target network side device carries the first indication field, and the first indication field indicates that the current RLF report is an event related to CHO, the target network side device needs to initiate, as early as possible, a procedure of obtaining the RLF report to the terminal, that is, perform a request by using second indication information. The second indication information may be, for example, a UEInformationRequest (UE information request) message.

It should be noted that, to enable the source network side device to minimize time for maintaining the terminal context, the target network side device needs to obtain the RLF report related to CHO as soon as possible.

If the target network side device does not obtain the RLF report as soon as possible (for example, overload occurs in a radio access network), it indicates that the network does not care about the RLF report, and CHO information corresponding to the RLF report may be released due to a timeout by the source network side device.

Therefore, in the method for processing CHO configuration information provided in this embodiment of this application, in a case that the RRC message includes the RLF indication information, the target network side device immediately initiates the procedure of obtaining the RLF report, so that the RLF report can be obtained as soon as possible, thereby avoiding that the CHO information is released due to a timeout, thereby ensuring a smooth update of CHO configuration information.

In an embodiment, that the RLF report is related to CHO may include at least one of the following:
the RLF report includes a CHO-related parameter; and
the RLF report is generated after the terminal receives the CHO configuration information.

It should be noted that after the terminal performs CHO, the RLF report includes the CHO-related parameter. In a case that CHO is not performed, the RLF report does not include the CHO-related parameter. However, if the RLF report is generated after the source network side device configures CHO of the terminal, the RLF report is still considered to be related to CHO.

In an embodiment, step 330 may include:
sending, by the target network side device, the RLF report to the source network side device.

It should be noted that when the source network side device locally stores the CHO-related information, the target network side device only needs to send the RLF report to the source network side device, so that the source network side device optimizes the CHO configuration information corresponding to the terminal according to the RLF report and the CHO-related information.

In an embodiment, after the step of obtaining, by the target network side device, an RLF report according to the RRC message, the method for processing CHO configuration information provided in this embodiment of this application may further include:
sending, by the target network side device, a first notification message to the source network side device according to the RLF report; and
receiving, by the target network side device, CHO-related information fed back by the source network side device, where the CHO-related information corresponds to the terminal.

For example, when the terminal encounters an RLF in the first cell and is handed over to the second cell (a cell in the CHO candidate cell list) (that is, a scene 1), the terminal sends the RLF report to the target network side device (a network side device corresponding to the second cell), and the target network side device sends the first notification message, for example, an Xn message such as an HO SUCCESS (handover success) message, to the source network side device, to instruct the source network side device to send the CHO-related information to a specific network side device.

After determining that the source network side device needs to send the CHO-related information to the target network side device, the source network side device sends the CHO-related information to the target network side device. After receiving the CHO-related information, the target network side device temporarily stores the CHO-related information.

For example, when the terminal is handed over from the first cell to the second cell, and encounters an RLF in the second cell and is reestablished to the third cell (a cell other than a source cell and a CHO candidate cell) (that is, a scene 2), the terminal sends the RLF report to the target network side device (a network side device corresponding to the third cell), and the target network side device determines an ID of the source network side device according to information about a network side device corresponding to the first cell that is connected to the terminal when an RLC occurs in the RLF report, to send the first notification message, for example, an Xn message such as a failure indication (failure indication) message, to the source network side device according to the ID, to instruct the source network side device to send the CHO-related information to a specific network side device.

After determining that the source network side device needs to send the CHO-related information to the target network side device, the source network side device sends the CHO-related information to the target network side device. After receiving the CHO-related information, the target network side device temporarily stores the CHO-related information.

It should be noted that when the terminal is handed over to the second cell, the target network side device sends an HO SUCCESS message to the source network side device due to the handover process. When the terminal is reestablished to the third cell, because no handover process occurs, the target network side device cannot notify the source network side device by using the HO SUCCESS message. Therefore, in this case, the source network side device cannot determine a specific network side device to which the CHO-related information needs to be sent.

However, the target network side device (a network side device corresponding to the third cell) sends the first notification message to the source network side device when the terminal encounters an RLF in the first cell and is reestablished to the third cell (that is, the scene 1), so that the source network side device determines, according to the first notification message, a specific network side device to which the CHO-related information needs to be sent, thereby ensuring a success rate of updating CHO configuration information.

In an embodiment, the sending, by the target network side device, first indication information to a source network side device may include:
sending, by the target network side device, the first indication information to the source network side device, where the first indication information includes the RLF report and at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

It should be noted that in a case that the source network side device sends the CHO-related information to the target network side device, to optimize the CHO configuration information, the source network side device needs to receive the RLF report from the target network side device and at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

For example, the target network side device may send the RLF report and at least one of the foregoing information to the source network side device by using the first indication information, for example, an Xn message such as a handover report.

After receiving the first indication information sent by the target network side device, the source network side device may optimize the CHO configuration information corresponding to the terminal according to the first indication information.

According to the method for processing CHO configuration information provided in this embodiment of this application, in a case that a source network side device sends CHO-related information to a target network side device, the target network side device returns first indication information that includes an RLF report and the CHO-related information to the source network side device, to ensure that CHO configuration information can still be updated in this case, thereby improving a success rate of updating CHO configuration information.

In an embodiment, the first indication information may be any one of the following:
a failure indication (failure indication) message; and
a handover report (handover report).

FIG. 4 is a schematic flowchart of a method for triggering optimization of CHO configuration information according to an embodiment of this application. Referring to FIG. 4, an embodiment of this application further provides a method for triggering optimization of CHO configuration information. The method may include:
Step 410: A terminal receives CHO configuration information sent by a source network side device.
Step 420: The terminal sends an RRC message to a target network side device when the terminal encounters an RLF.

The RRC message includes at least one of RLF indication information and an RLF report, and the RLF indication information and the RLF report are used to instruct to optimize CHO configuration information.

It should be noted that the method for triggering optimization of CHO configuration information provided in this embodiment of this application may be performed by the terminal, such as a mobile phone or a computer.

In step 410, after receiving the CHO configuration information sent by the source network side device, the terminal performs a CHO operation according to the CHO configuration information.

In step 420, when the terminal encounters an RLF in a process of performing CHO, the terminal sends the RRC message to the target network side device, where the RRC includes at least one of the RLF indication information and the RLF report.

Optionally, when the RRC message directly carries the RLF report, the target network side device may directly obtain the RLF report from the RRC message sent by the terminal instead of sending any request information to the terminal, thereby reducing a quantity of times of interaction and improving efficiency of obtaining the RLF report.

When the RRC message includes the RLF indication information, the RLF indication information may be implemented by a first indication field. When the first indication field is present, it may indicate that the RLF report is related to CHO. When the first indication field is not present, it indicates that the RLF report is not related to CHO. For example, in this case, the RLF report may be related to DAPS (Dual Active Protocol Stack, dual active protocol stack) handover, HO (Handover, Handover), a common RLF, or the like.

Optionally, when the RRC message sent by the terminal to the target network side device carries the first indication field, and the first indication field indicates that the current RLF report is an event related to CHO, the target network side device needs to initiate, as early as possible, a procedure of obtaining the RLF report to the terminal, that is, perform a request by using second indication information. The second indication information may be, for example, a UEInformationRequest (UE information request) message.

It should be noted that, to enable the source network side device to minimize time for maintaining the terminal context, the target network side device needs to obtain the RLF report related to CHO as soon as possible.

If the target network side device does not obtain the RLF report as soon as possible (for example, overload occurs in a radio access network), it indicates that the network does not care about the RLF report, and CHO information corresponding to the RLF report may be released due to a timeout by the source network side device.

Therefore, in the method for triggering optimization of CHO configuration information provided in this embodiment of this application, in a case that the RRC message includes the RLF indication information, the target network side device immediately initiates the procedure of obtaining the RLF report, so that the RLF report can be obtained as soon as possible, thereby avoiding that the CHO information is released due to a timeout, thereby ensuring a smooth update of CHO configuration information.

After the target network side device obtains the RLF report by using the RRC message sent by the terminal, the source network side device is triggered to optimize the CHO configuration information.

According to the method for triggering optimization of CHO configuration information provided in this embodiment of this application, after an RLF report is obtained, a source network side device is triggered to optimize CHO configuration information corresponding to a terminal, to ensure that the terminal can obtain updated CHO configuration information when encountering an RLF in a CHO process, thereby effectively improving a success rate of updating CHO configuration information compared with the prior art.

In an embodiment, step 420 may include:
Scene 1: The terminal sends the RRC message to the target network side device in a case that the terminal encounters an RLF in a first cell before performing CHO and is reestablished to a second cell or performs RLF recovery in a third cell.

For example, the terminal receives the CHO configuration information delivered by the source network side device, and encounters an RLF in the first cell before observing a cell that meets a CHO execution condition and is reestablished a specific cell or performs RLF recovery in a CHO candidate cell.

In this scene, the second cell includes the specific cell and the CHO candidate cell. The specific cell is a cell other than the first cell and the CHO candidate cell.

In this scene, the RRC message includes a first RLF report, and the first RLF report is generated when the terminal encounters an RLF in the first cell. When encountering an RLF in the first cell, the terminal sends the first RLF report to the target network side device by using the RRC message, and then the target network side device sends the first RLF report to the source network side device.

Scene 2: The terminal sends the RRC message to the target network side device in a case that the terminal performs CHO to hand over from a first cell to a second cell and is reestablished to a third cell after encountering an RLF in the second cell.

For example, the terminal receives a CHO configuration delivered by the source network side device, and selects the second cell that meets a CHO execution condition to successfully complete CHO. However, in a short time, the terminal encounters an RLF in the second cell and is successfully reestablished to the third cell.

A second RLF report is generated when the terminal encounters an RLF in the second cell. When encountering an RLF in the second cell, the terminal sends the second RLF report to the target network side device by using the RRC message, and then the target network side device sends the second RLF report to the source network side device.

Scene 3: The terminal sends the RRC message to the source network side device in a case that the terminal performs CHO to hand over from a first cell to a second cell and is reestablished to the first cell after encountering an RLF in the second cell.

For example, the terminal receives a CHO configuration delivered by the source network side, and selects the second cell that meets a CHO execution condition to successfully complete CHO. However, in a short time, the terminal encounters an RLF in the second cell and is successfully reestablished to the first cell.

The first cell is a cell corresponding to the source network side device, the second cell is a cell corresponding to the target network side device, and the third cell is a cell corresponding to a third network side device.

According to the method for triggering optimization of CHO configuration information provided in this embodiment of this application, it is ensured that the source network side device can be triggered to optimize the CHO configuration information in different scenes, thereby further ensuring a success rate of updating CHO configuration information.

In an embodiment, when the RRC message includes the RLF indication information, the RLF indication information indicates that the RLF is related to CHO.

In an embodiment, that the RLF report is related to CHO may include at least one of the following:
the RLF report includes a CHO-related parameter; and
the RLF report is generated after the terminal receives the CHO configuration information.

It should be noted that after the terminal performs CHO, the RLF report includes the CHO-related parameter. In a case that CHO is not performed, the RLF report does not include the CHO-related parameter, but the RLF report is generated only after the source network side device configures CHO of the terminal. Therefore, in this case, the RLF report is still considered to be related to CHO.

In an embodiment, the RRC message may include at least one of the following:
an RRCReconfigurationComplete (RRC reconfiguration complete) message;
an RRCSetupComplete (RRC setup complete) message;
an RRCReestablishmentComplete (RRC reestablishment complete) message;
an RRCResumeComplete (RRC resume complete) message; and
a UEInformationResponse (UE information response) message.

In an embodiment, the first indication field included in the RRC message may be implemented by using the following solutions:
Solution (1): Extend an RRCSetupComplete (RRC setup complete) message, and introduce RRCSetupComplete-vl710-IEs to include the first indication field r1f-CHO-r17.
Solution (2): Extend UE-MeasurementsAvailable to include the first indication field r1f-CHO-r17.

In the solutions (1) and (2):
When r1f-CHO-r17 exists, it indicates that a CHO-related RLF event exists on the terminal side.

Optionally, there is a coupling relationship between r1f-CHO-r17 and r1f-InfoAvailable-r16 in UE-MeasurementsAvailable. That is, the terminal needs to set whether r1f-InfoAvailable-r16 exists before further setting whether r1f-CHO-r17 exists; and when the terminal sets that r1f-InfoAvailable-r16 does not exist, r1f-CHO-r17 cannot be included.

Optionally, there is an exclusive relationship between r1f-CHO-r17 and r1f-InfoAvailable-r16 in UE-MeasurementsAvailable. That is, when rlf-InfoAvailable-r16 exists, it indicates that there is a CHO-independent RLF report on the terminal side, and when r1f-CHO-r17 exists, it indicates that there is a CHO-related RLF event on the terminal side. The terminal can set that only one of rlf-CHO-r17 and r1f-InfoAvailable-r16 fields exists.

To facilitate understanding of the technical solutions provided in the embodiments of this application, the following examples are provided:
Example 1: A source network side device mainly maintains CHO-related information:
   Step 1: A source network side device delivers CHO configuration information to a terminal.
   Step 2: The terminal sends an RRC message to a target network side device when the terminal encounters an RLF in a first cell and is reestablished to a third cell, where the RRC message carries a first indication field, indicating that a CHO-related RLF report currently exists on the terminal side.
   Step 3: The target network side device receives the first indication field, immediately sends a UEInformationRequest message to the terminal, and requests the terminal to send the RLF report.
   Step 4: The terminal receives an RLF report request indication in the UEInformationRequest, adds the RLF report to UEInformationResponse, and sends the RLF report to the target network side device.
   Step 5: The target network side device sends the RLF report to the source network side device by using an Xn message Failure Indication.
   Step 6: After receiving the message that carries the RLF report, the source network side device optimizes the CHO configuration information with reference to local CHO-related information.
Example 2: A target network side device mainly maintains CHO-related information, where the target network side device is a network side device corresponding to a CHO candidate cell.
   Step 1: A source network side device delivers CHO configuration information to a terminal.
   Step 2: The terminal sends an RRC message to a target network side device when the terminal encounters an RLF in a first cell and recovers to a second cell (a CHO candidate cell), where the RRC message carries a first indication field, indicating that a CHO-related RLF report currently exists on the terminal side.
   Step 3: After receiving the first indication field, the target network side device:
      a) Send a UEInformationRequest message to the terminal immediately to request the terminal to send an RLF report.
      b) Generate an Xn message such as HO SUCCESS to be sent to the source network side device.
   Step 4: The terminal receives an RLF report request indication in UEInformationRequest, adds the RLF report to UEInformationResponse, and sends UEInformationResponse to the target network side device. After receiving HO SUCCESS, the source network side device sends CHO-related information to the target network side device.
   Step 5: The target network side device sends the RLF report and the received CHO-related information to the source network side device by using an Xn message such as a handover report.
   Step 6: After receiving the handover report, the source network side device optimizes the CHO configuration information.
Example 3: A target network side device mainly maintains CHO-related information, where the target network side device is a network side device corresponding to a third cell.
   Step 1: A source network side device delivers CHO configuration information to a terminal.
   Step 2: The terminal sends an RRC message to a target network side device when the terminal encounters an RLF in a first cell and is reestablished to a third cell, where the RRC message carries a first indication field, indicating that a CHO-related RLF report currently exists on the terminal side.
   Step 3: After receiving the first indication field, the target network side device immediately sends a UEInformationRequest message to the terminal to request the terminal to send the RLF report.
   Step 4: The terminal receives an RLF report request indication in UEInformationRequest, adds the RLF report to UEInformationResponse, and sends UEInformationResponse to the target network side device.
   Step 5: The target network side device generates an Xn message such as a failure indication to the source network side device (that is, a network side device indicated by a cell ID) according to an ID of a cell connected to the terminal when an RLF occurs.
   Step 6: After receiving the failure indication, the source network side device sends CHO-related information to the target network side device.
   Step 7: The target network side device sends the RLF report and the received CHO-related information to the source network side device by using an Xn message such as a handover report.
   Step 8: After receiving the handover report, the source network side device optimizes the CHO configuration information.

It should be noted that, the method for optimizing CHO configuration information provided in the embodiments of this application may be performed by an apparatus for optimizing CHO configuration information, or a control module that is in the apparatus for optimizing CHO configuration information and that is configured to perform the method for optimizing CHO configuration information. In the embodiments of this application, an example in which the apparatus for optimizing CHO configuration information performs the method for optimizing CHO configuration information is used to describe the apparatus for optimizing CHO configuration information provided in the embodiments of this application.

FIG. 5 is a schematic structural diagram of an apparatus for optimizing CHO configuration information according to an embodiment of this application. Referring to FIG. 5, an embodiment of this application provides an apparatus for optimizing CHO configuration information. The apparatus may include:
a configuration module 510, configured to send conditional handover CHO configuration information to a terminal;
a receiving module 520, configured to receive first indication information, where the first indication information includes a radio link failure RLF report; and
an optimization module 530, configured to optimize CHO configuration information corresponding to the terminal according to the first indication information.

According to the apparatus for optimizing CHO configuration information provided in this embodiment of this application, a source network side device can finally successfully receive an RLF report, and can optimize CHO configuration information corresponding to a terminal based on the RLF report, to update the CHO configuration information, thereby effectively improving a success rate of updating CHO configuration information compared with the prior art.

In an embodiment, the receiving module 520 is specifically configured to:
in a case that the terminal does not perform CHO and encounters an RLF in a first cell, receive first indication information sent by a target network side device, where the first indication information includes a first RLF report;
in a case that the terminal performs CHO to hand over from a first cell to a second cell and is reestablished to a third cell after encountering an RLF in the second cell, receive first indication information sent by a target network side device, where the first indication information includes a second RLF report; or
in a case that the terminal performs CHO to hand over from a first cell to a second cell and is reestablished to the first cell after encountering an RLF in the second cell, receive first indication information sent by the terminal, where the first indication information includes a second RLF report, where
the first RLF report is sent when the terminal encounters an RLF in the first cell; the second RLF report is sent when the terminal encounters an RLF in the second cell; and the first cell is a cell corresponding to the source network side device, the second cell is a cell corresponding to the target network side device, and the third cell is a cell corresponding to a third network side device.

In an embodiment, before receiving the first indication information, the receiving module 520 is further configured to:
receive a first notification message sent by a target network side device; and
send CHO-related information to the target network side device according to the first notification message, where
the CHO-related information includes at least one of the following:
   terminal context information including the CHO configuration information corresponding to the terminal; and
   the CHO configuration information corresponding to the terminal, where
   the CHO configuration information corresponding to the terminal includes at least one of the following:
      a CHO execution condition configured by the source network side device for the terminal; and
      a CHO candidate cell list configured by the source network side device for the terminal.

In an embodiment, the receiving module 520 is specifically configured to:
determine an ID of the target network side device according to the first notification message; and
send the CHO-related information to the target network side device according to the ID of the target network side device.

In an embodiment, the first notification message is a handover success HO SUCCESS message; or
the first notification message is sent to the receiving module after the target network side device determines an ID of the source network side device according to the RLF report.

In an embodiment, the first indication information further includes at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

The apparatus for optimizing CHO configuration information in this embodiment of this application may be an electronic device, or may be a component in the electronic device, such as an integrated circuit or a chip. The electronic device may be a terminal, or may be a device other than the terminal. For example, the mobile electronic device may be a mobile phone, a tablet computer, a laptop computer, a palmtop computer, an in-vehicle electronic terminal, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), an automated teller machine, or a self-service machine. This is not specifically limited in this embodiment of this application.

The apparatus for optimizing CHO configuration information in this embodiment of this application may be an apparatus with an operating system. The operating system may be an Android (Android) operating system, an iOS operating system, or another possible operating system. This is not specifically limited in this embodiment of this application.

The apparatus for optimizing CHO configuration information provided in this embodiment of this application can implement the processes implemented in the method embodiment in FIG. 2, and achieve a same technical effect. To avoid repetition, details are not described herein again.

It should be noted that, the method for processing CHO configuration information provided in the embodiments of this application may be performed by an apparatus for processing CHO configuration information, or a control module that is in the apparatus for processing CHO configuration information and that is configured to perform the method for processing CHO configuration information. In the embodiments of this application, an example in which the apparatus for processing CHO configuration information performs the method for processing CHO configuration information is used to describe the apparatus for processing CHO configuration information provided in the embodiments of this application.

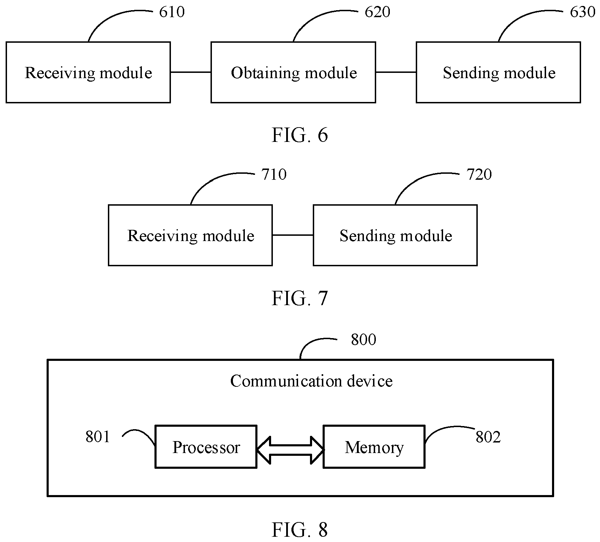

FIG. 6 is a schematic structural diagram of an apparatus for processing CHO configuration information according to an embodiment of this application. Referring to FIG. 6, an embodiment of this application provides an apparatus for processing CHO configuration information. The apparatus may include:
a receiving module 610, configured to receive a radio resource control RRC message sent by a terminal;
an obtaining module 620, configured to obtain a radio link failure RLF report according to the RRC message; and
a sending module 630, configured to send first indication information to a source network side device, where
the first indication information is used to instruct the source network side device to optimize conditional handover CHO configuration information corresponding to the terminal.

According to the apparatus for processing CHO configuration information provided in this embodiment of this application, after obtaining an RLF report, a target network side device sends first indication information to a source network side device to instruct the source network side device to optimize CHO configuration information corresponding to a terminal, to ensure that the terminal can obtain updated CHO configuration information when encountering an RLF in a CHO process, thereby effectively improving a success rate of updating CHO configuration information compared with the prior art.

In an embodiment, the RRC message includes at least one of RLF indication information and the RLF report; and
the obtaining module 620 is specifically configured to:
in a case that the RRC message includes the RLF report, obtain the RLF report; or
in a case that the RRC message does not include the RLF report, send second indication information to the terminal according to the RLF indication information, where the second indication information is used to instruct the terminal to send the RLF report to the target network side device; and
receive the RLF report, where
the RLF indication information indicates that the RLF report is related to CHO.

In an embodiment, that the RLF report is related to CHO includes at least one of the following:
the RLF report includes a CHO-related parameter; and
the RLF report is generated after the terminal receives the CHO configuration information.

In an embodiment, the sending module 630 is specifically configured to:
send the RLF report to the source network side device.

In an embodiment, the sending module 630 is further configured to:
send a first notification message to the source network side device according to the RLF report; and
receive CHO-related information fed back by the source network side device, where the CHO-related information corresponds to the terminal.

In an embodiment, the sending module 630 is specifically configured to:
send the first indication information to the source network side device, where the first indication information includes the RLF report and at least one of the following:
the CHO-related information;
measurement information that corresponds to a CHO candidate cell and that is determined by the apparatus for processing CHO configuration information from neighboring cell measurement information in the RLF report according to the CHO candidate cell list; and
information obtained after the apparatus for processing CHO configuration information marks a neighboring cell of the CHO candidate cell in the RLF report according to the CHO candidate cell list.

In an embodiment, the first indication information is any one of the following:
a failure indication message; and
a handover report.

The apparatus for processing CHO configuration information in this embodiment of this application may be an electronic device, or may be a component in the electronic device, such as an integrated circuit or a chip. The electronic device may be a terminal, or may be a device other than the terminal. For example, the mobile electronic device may be a mobile phone, a tablet computer, a laptop computer, a palmtop computer, an in-vehicle electronic terminal, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), an automated teller machine, or a self-service machine. This is not specifically limited in this embodiment of this application.

The apparatus for processing CHO configuration information in this embodiment of this application may be an apparatus with an operating system. The operating system may be an Android (Android) operating system, an iOS operating system, or another possible operating system. This is not specifically limited in this embodiment of this application.

The apparatus for processing CHO configuration information provided in this embodiment of this application can implement the processes implemented in the method embodiment in FIG. 3, and achieve a same technical effect. To avoid repetition, details are not described herein again.

It should be noted that, the method for triggering optimization of CHO configuration information provided in the embodiments of this application may be performed by an apparatus for triggering optimization of CHO configuration information, or a control module that is in the apparatus for triggering optimization of CHO configuration information and that is configured to perform the method for triggering optimization of CHO configuration information. In the embodiments of this application, an example in which the apparatus for triggering optimization of CHO configuration information performs the method for triggering optimization of CHO configuration information is used to describe the apparatus for triggering optimization of CHO configuration information provided in the embodiments of this application.

FIG. 7 is a schematic structural diagram of an apparatus for triggering optimization of CHO configuration information according to an embodiment of this application. Referring to FIG. 7, an embodiment of this application provides an apparatus for triggering optimization of CHO configuration information. The apparatus may include:
a receiving module 710, configured to receive conditional handover CHO configuration information sent by a source network side device; and
a sending module 720, configured to send a radio resource control RRC message to a target network side device when the terminal encounters a radio link failure RLF, where
the RRC message includes at least one of RLF indication information and an RLF report, and the RLF indication information and the RLF report are used to instruct to optimize CHO configuration information.

According to the apparatus for triggering optimization of CHO configuration information provided in this embodiment of this application, after an RLF report is obtained, a source network side device is triggered to optimize CHO configuration information corresponding to a terminal, to ensure that the terminal can obtain updated CHO configuration information when encountering an RLF in a CHO process, thereby effectively improving a success rate of updating CHO configuration information compared with the prior art.

In an embodiment, the sending module 720 is specifically configured to:
send the RRC message to the target network side device in a case that the terminal encounters an RLF in a first cell before performing CHO and is reestablished to a second cell or performs RLF recovery in a third cell;
send the RRC message to the target network side device in a case that the terminal performs CHO to hand over from a first cell to a second cell and is reestablished to a third cell after encountering an RLF in the second cell; or
send the RRC message to the source network side device in a case that the terminal performs CHO to hand over from a first cell to a second cell and is reestablished to the first cell after encountering an RLF in the second cell, where
the first cell is a cell corresponding to the source network side device, the second cell is a cell corresponding to the target network side device, and the third cell is a cell corresponding to a third network side device.

In an embodiment, in a case that the RRC message includes RLF indication information, the RLF indication information indicates that the RLF is related to CHO.

In an embodiment, that the RLF report is related to CHO includes at least one of the following:
the RLF report includes a CHO-related parameter; and
the RLF report is generated after the terminal receives the CHO configuration information.
In an embodiment, the RRC message includes at least one of the following:
   an RRCReconfigurationComplete message;
   an RRCSetupComplete message;
   an RRCReestablishmentComplete message;
   an RRCResumeComplete message; and
   a UEInformationResponse message.

The apparatus for triggering optimization of CHO configuration information in this embodiment of this application may be an electronic device, or may be a component in the electronic device, such as an integrated circuit or a chip. The electronic device may be a terminal, or may be a device other than the terminal. For example, the mobile electronic device may be a mobile phone, a tablet computer, a laptop computer, a palmtop computer, an in-vehicle electronic terminal, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), an automated teller machine, or a self-service machine. This is not specifically limited in this embodiment of this application.

The apparatus for triggering optimization of CHO configuration information in this embodiment of this application may be an apparatus with an operating system. The operating system may be an Android (Android) operating system, an iOS operating system, or another possible operating system. This is not specifically limited in this embodiment of this application.

The apparatus for triggering optimization of CHO configuration information provided in this embodiment of this application can implement the processes implemented in the method embodiment in FIG. 4, and achieve a same technical effect. To avoid repetition, details are not described herein again.

Optionally, as shown in FIG. 8, an embodiment of this application further provides a communication device 800, including a processor 801, a memory 802, and a program or an instruction stored in the memory 802 and executable on the processor 801. For example, when the communication device 800 is a terminal, the program or the instruction is executed by the processor 801 to implement the processes of the foregoing method embodiment on the terminal side, and a same technical effect can be achieved. When the communication device 800 is a network side device, the program or the instruction is executed by the processor 801 to implement the processes of the foregoing method embodiment on the network side, and a same technical effect can be achieved. To avoid repetition, details are not described herein again.

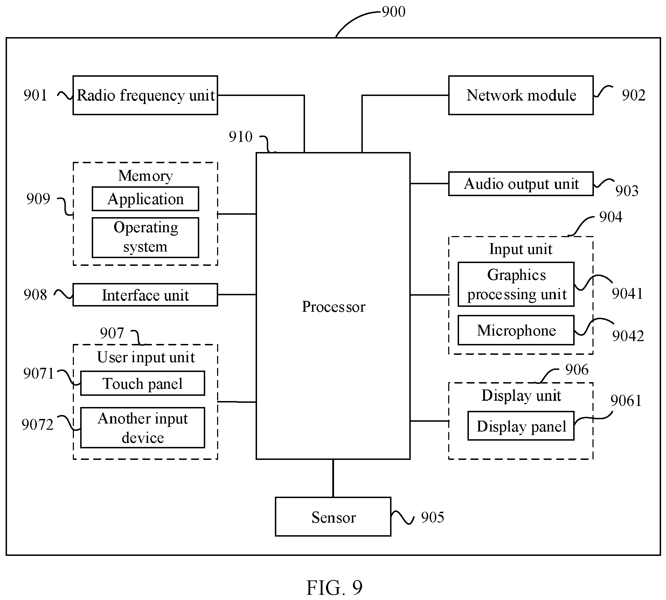

An embodiment of this application further provides a terminal, including a processor and a communication interface. The communication interface is configured to: receive conditional handover CHO configuration information sent by a source network side device; and send a radio resource control RRC message to a target network side device when the terminal encounters a radio link failure RLF. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 9 is a schematic diagram of a hardware structure of a terminal according to an embodiment of this application.

The terminal 900 includes but is not limited to at least a part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the terminal 900 may further include a power supply (such as a battery) that supplies power to each component. The power supply may be logically connected to the processor 910 by using a power supply management system, to implement functions such as charging and discharging management, and power consumption management by using the power supply management system. The terminal structure shown in FIG. 9 constitutes no limitation on the terminal, and the terminal may include more or fewer components than those shown in the figure, or combine some components, or have different component arrangements. Details are not described herein.

It should be understood that, in this embodiment of this application, the input unit 904 may include a graphics processing unit (Graphics Processing Unit, GPU) 9041 and a microphone 9042, and the graphics processing unit 9041 processes image data of a still picture or a video obtained by an image capture apparatus (such as a camera) in a video capture mode or an image capture mode. The display unit 906 may include a display panel 9061. Optionally, the display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and then sends the downlink data to the processor 910 for processing; and sends uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program and various data. The memory 909 may mainly include a first storage area for storing a program or an instruction and a second storage area for storing data. The first storage area may store an operating system, and an application or an instruction required by at least one function (for example, a sound playing function or an image playing function). In addition, the memory 909 may include a volatile memory or a non-volatile memory, or the memory 909 may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DR RAM). The memory 909 in this embodiment of this application includes but is not limited to these memories and any memory of another proper type.

The processor 910 may include one or more processing units. Optionally, an application processor and a modem processor are integrated into the processor 910. The application processor mainly processes an operating system, a user interface, an application, or the like. The modem processor mainly processes a wireless communication signal, for example, a baseband processor. It can be understood that, alternatively, the modem processor may not be integrated into the processor 910.

The radio frequency unit 901 is configured to: receive conditional handover CHO configuration information sent by a source network side device; and send a radio resource control RRC message to a target network side device when the terminal encounters a radio link failure RLF, where the RRC message includes at least one of RLF indication information and an RLF report, and the RLF indication information and the RLF report are used to instruct to optimize CHO configuration information.

According to the terminal provided in this embodiment of this application, after an RLF report is obtained, a source network side device is triggered to optimize CHO configuration information corresponding to a terminal, to ensure that the terminal can obtain updated CHO configuration information when encountering an RLF in a CHO process, thereby effectively improving a success rate of updating CHO configuration information compared with the prior art.

Optionally, the radio frequency unit 101 is specifically configured to:
send the RRC message to the target network side device in a case that the terminal encounters an RLF in a first cell before performing CHO and is reestablished to a second cell or performs RLF recovery in a third cell;
send the RRC message to the target network side device in a case that the terminal performs CHO to hand over from a first cell to a second cell and is reestablished to a third cell after encountering an RLF in the second cell; or
send the RRC message to the source network side device in a case that the terminal performs CHO to hand over from a first cell to a second cell and is reestablished to the first cell after encountering an RLF in the second cell, where
the first cell is a cell corresponding to the source network side device, the second cell is a cell corresponding to the target network side device, and the third cell is a cell corresponding to a third network side device.

An embodiment of this application further provides a network side device, including a processor and a communication interface. The communication interface is configured to: send conditional handover CHO configuration information to a terminal; and receive first indication information, where the first indication information includes a radio link failure RLF report; and the processor is configured to optimize CHO configuration information corresponding to the terminal according to the first indication information; or
the communication interface is configured to: receive a radio resource control RRC message sent by a terminal; and send first indication information to a source network side device; and the processor is configured to obtain a radio link failure RLF report according to the RRC message, where the first indication information is used to instruct the source network side device to optimize conditional handover CHO configuration information corresponding to the terminal.

This network side device embodiment corresponds to the foregoing method embodiment on the network side. Each implementation process and implementation of the foregoing method embodiment on the network side may be applicable to this network side device embodiment, and a same technical effect can be achieved.

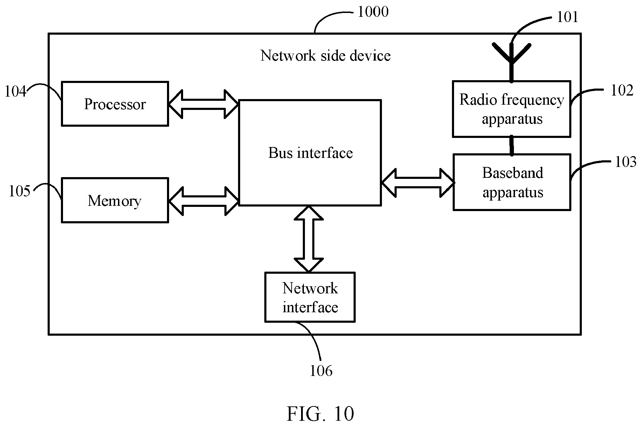

Specifically, an embodiment of this application further provides a network side device. As shown in FIG. 10, a network device 1000 includes an antenna 101, a radio frequency apparatus 102, and a baseband apparatus 103. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes information that needs to be sent, and sends processed information to the radio frequency apparatus 102. The radio frequency apparatus 102 processes the received information, and sends processed information by using the antenna 101.

The frequency band processing apparatus may be located in the baseband apparatus 103. The method performed by the network side device in the foregoing embodiment may be implemented in the baseband apparatus 103. The baseband apparatus 103 includes a processor 104 and a memory 105.

The baseband apparatus 103 may include, for example, at least one baseband board, where a plurality of chips are disposed on the baseband board. As shown in FIG. 10, one chip is, for example, the processor 104, which is connected to the memory 105, so as to invoke a program in the memory 105 to perform operations of the network device shown in the foregoing method embodiment.

The baseband apparatus 103 may further include a network interface 106, configured to exchange information with the radio frequency apparatus 102. For example, the interface is a common public radio interface (common public radio interface, CPRI for short).

Specifically, the network side device in this embodiment of the present invention further includes an instruction or a program stored in the memory 105 and executable on the processor 104. The processor 104 invokes the instruction or the program in the memory 105 to perform the method performed by the modules shown in FIG. 5 and FIG. 6, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A method for optimizing CHO configuration information, comprising:
sending, by a source network side device, conditional handover CHO configuration information to a terminal;
receiving, by the source network side device, first indication information, wherein the first indication information comprises a radio link failure RLF report; and
optimizing, by the source network side device, CHO configuration information corresponding to the terminal according to the first indication information.

2. The method for optimizing CHO configuration information according to claim 1, wherein the receiving, by the source network side device, first indication information comprises:
in a case that the terminal does not perform CHO and encounters an RLF in a first cell, receiving, by the source network side device, first indication information sent by a target network side device, wherein the first indication information comprises a first RLF report;
in a case that the terminal performs CHO to hand over from a first cell to a second cell and is reestablished to a third cell after encountering an RLF in the second cell, receiving, by the source network side device, first indication information sent by a target network side device, wherein the first indication information comprises a second RLF report; or
in a case that the terminal performs CHO to hand over from a first cell to a second cell and is reestablished to the first cell after encountering an RLF in the second cell, receiving, by the source network side device, first indication information sent by the terminal, wherein the first indication information comprises a second RLF report, wherein
the first RLF report is sent when the terminal encounters an RLF in the first cell; the second RLF report is sent when the terminal encounters an RLF in the second cell; and the first cell is a cell corresponding to the source network side device, the second cell is a cell corresponding to the target network side device, and the third cell is a cell corresponding to a third network side device.

3. The method for optimizing CHO configuration information according to claim 1, wherein before the receiving, by the source network side device, first indication information, the method further comprises:
receiving, by the source network side device, a first notification message sent by a target network side device; and
sending, by the source network side device, CHO-related information to the target network side device according to the first notification message, wherein
the CHO-related information comprises at least one of the following:
terminal context information comprising the CHO configuration information corresponding to the terminal; and
the CHO configuration information corresponding to the terminal, wherein
the CHO configuration information corresponding to the terminal comprises at least one of the following:
a CHO execution condition configured by the source network side device for the terminal; and
a CHO candidate cell list configured by the source network side device for the terminal.

4. The method for optimizing CHO configuration information according to claim 3, wherein the sending, by the source network side device, CHO-related information to the target network side device according to the first notification message comprises:
determining, by the source network side device, an ID of the target network side device according to the first notification message; and
sending, by the source network side device, the CHO-related information to the target network side device according to the ID of the target network side device.

5. The method for optimizing CHO configuration information according to claim 3, wherein the first notification message is a handover success HO SUCCESS message; or
the first notification message is sent to the source network side device after the target network side device determines an ID of the source network side device according to the RLF report.

6. The method for optimizing CHO configuration information according to claim 3, wherein the first indication information further comprises at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

7. A method for processing CHO configuration information, comprising:
receiving, by a target network side device, a radio resource control RRC message sent by a terminal;
obtaining, by the target network side device, a radio link failure RLF report according to the RRC message; and
sending, by the target network side device, first indication information to a source network side device, wherein
the first indication information is used to instruct the source network side device to optimize conditional handover CHO configuration information corresponding to the terminal.

8. The method for processing CHO configuration information according to claim 7, wherein the RRC message comprises at least one of RLF indication information and the RLF report; and
the obtaining, by the target network side device, an RLF report according to the RRC message comprises:
in a case that the RRC message comprises the RLF report, obtaining, by the target network side device, the RLF report; or
in a case that the RRC message does not comprise the RLF report, sending, by the target network side device, second indication information to the terminal according to the RLF indication information, wherein the second indication information is used to instruct the terminal to send the RLF report to the target network side device; and
receiving, by the target network side device, the RLF report, wherein
the RLF indication information indicates that the RLF report is related to CHO.

9. The method for processing CHO configuration information according to claim 8, wherein that the RLF report is related to CHO comprises at least one of the following:
the RLF report comprises a CHO-related parameter; and
the RLF report is generated after the terminal receives the CHO configuration information.

10. The method for processing CHO configuration information according to claim 9, wherein the sending, by the target network side device, first indication information to a source network side device comprises:
sending, by the target network side device, the RLF report to the source network side device.

11. The method for processing CHO configuration information according to claim 9, wherein after the step of obtaining, by the target network side device, an RLF report according to the RRC message, the method further comprises:
sending, by the target network side device, a first notification message to the source network side device according to the RLF report; and
receiving, by the target network side device, CHO-related information fed back by the source network side device, wherein the CHO-related information corresponds to the terminal.

12. The method for processing CHO configuration information according to claim 11, wherein the sending, by the target network side device, first indication information to a source network side device comprises:
sending, by the target network side device, the first indication information to the source network side device, wherein the first indication information comprises the RLF report and at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

13. The method for processing CHO configuration information according to any one of claims 8 to 12, wherein a cell corresponding to the target network side device is any one of the following:
a first target cell, wherein the first target cell is a cell that remains connected after the terminal performs cell handover or RLF recovery, and the target cell is a cell in a CHO candidate cell; and
a second target cell, wherein the second target cell is a cell other than a cell corresponding to the source network side device and the first target cell.

14. The method for processing CHO configuration information according to any one of claims 7 to 12, wherein the first indication information is any one of the following:
a failure indication message; and
a handover report.

15. A method for triggering optimization of CHO configuration information, comprising:
receiving, by a terminal, conditional handover CHO configuration information sent by a source network side device; and
sending, by the terminal, a radio resource control RRC message to a target network side device when the terminal encounters a radio link failure RLF, wherein
the RRC message comprises at least one of RLF indication information and an RLF report, and the RLF indication information and the RLF report are used to instruct to optimize CHO configuration information.

16. The method for triggering optimization of CHO configuration information according to claim 15, wherein the sending, by the terminal, an RRC message to a target network side device when the terminal encounters an RLF comprises:
sending, by the terminal, the RRC message to the target network side device in a case that the terminal encounters an RLF in a first cell before performing CHO and is reestablished to a second cell or performs RLF recovery in a third cell;
sending, by the terminal, the RRC message to the target network side device in a case that the terminal performs CHO to hand over from a first cell to a second cell and is reestablished to a third cell after encountering an RLF in the second cell; or
sending, by the terminal, the RRC message to the source network side device in a case that the terminal performs CHO to hand over from a first cell to a second cell and is reestablished to the first cell after encountering an RLF in the second cell, wherein
the first cell is a cell corresponding to the source network side device, the second cell is a cell corresponding to the target network side device, and the third cell is a cell corresponding to a third network side device.

17. The method for triggering optimization of CHO configuration information according to claim 15, wherein in a case that the RRC message comprises the RLF indication information, the RLF indication information indicates that the RLF is related to CHO.

18. The method for triggering optimization of CHO configuration information according to claim 17, wherein that the RLF report is related to CHO comprises at least one of the following:
the RLF report comprises a CHO-related parameter; and
the RLF report is generated after the terminal receives the CHO configuration information.

19. The method for triggering optimization of CHO configuration information according to any one of claims 15 to 18, wherein the RRC message comprises at least one of the following:
an RRCReconfigurationComplete message;
an RRCSetupComplete message;
an RRCReestablishmentComplete message;
an RRCResumeComplete message; and
a UEInformationResponse message.

20. An apparatus for optimizing CHO configuration information, comprising:
a configuration module, configured to send conditional handover CHO configuration information to a terminal;
a receiving module, configured to receive first indication information, wherein the first indication information comprises a radio link failure RLF report; and
an optimization module, configured to optimize CHO configuration information corresponding to the terminal according to the first indication information.

21. The apparatus for optimizing CHO configuration information according to claim 20, wherein the receiving module is specifically configured to:
in a case that the terminal does not perform CHO and encounters an RLF in a first cell, receive first indication information sent by a target network side device, wherein the first indication information comprises a first RLF report;
in a case that the terminal performs CHO to hand over from a first cell to a second cell and is reestablished to a third cell after encountering an RLF in the second cell, receive first indication information sent by a target network side device, wherein the first indication information comprises a second RLF report; or
in a case that the terminal performs CHO to hand over from a first cell to a second cell and is reestablished to the first cell after encountering an RLF in the second cell, receive first indication information sent by the terminal, wherein the first indication information comprises a second RLF report, wherein
the first RLF report is sent when the terminal encounters an RLF in the first cell; the second RLF report is sent when the terminal encounters an RLF in the second cell; and the first cell is a cell corresponding to the source network side device, the second cell is a cell corresponding to the target network side device, and the third cell is a cell corresponding to a third network side device.

22. The apparatus for optimizing CHO configuration information according to claim 20, wherein before receiving the first indication information, the receiving module is further configured to:
receive a first notification message sent by a target network side device; and
send CHO-related information to the target network side device according to the first notification message, wherein
the CHO-related information comprises at least one of the following:
terminal context information comprising the CHO configuration information corresponding to the terminal; and
the CHO configuration information corresponding to the terminal, wherein
the CHO configuration information corresponding to the terminal comprises at least one of the following:
a CHO execution condition configured by the source network side device for the terminal; and
a CHO candidate cell list configured by the source network side device for the terminal.

23. The apparatus for optimizing CHO configuration information according to claim 22, wherein the receiving module is specifically configured to:
determine an ID of the target network side device according to the first notification message; and
send the CHO-related information to the target network side device according to the ID of the target network side device.

24. The apparatus for optimizing CHO configuration information according to claim 22, wherein the first notification message is a handover success HO SUCCESS message; or
the first notification message is sent to the receiving module after the target network side device determines an ID of the source network side device according to the RLF report.

25. The apparatus for optimizing CHO configuration information according to claim 22, wherein the first indication information further comprises at least one of the following:
the CHO-related information;
measurement information that corresponds to a CHO candidate cell and that is determined by the target network side device from neighboring cell measurement information in the RLF report according to the CHO candidate cell list; and
information obtained after the target network side device marks a neighboring cell of the CHO candidate cell in the RLF report according to the CHO candidate cell list.

26. An apparatus for processing CHO configuration information, comprising:
a receiving module, configured to receive a radio resource control RRC message sent by a terminal;
an obtaining module, configured to obtain a radio link failure RLF report according to the RRC message; and
a sending module, configured to send first indication information to a source network side device, wherein
the first indication information is used to instruct the source network side device to optimize conditional handover CHO configuration information corresponding to the terminal.

27. The apparatus for processing CHO configuration information according to claim 26, wherein the RRC message comprises at least one of RLF indication information and the RLF report; and
the obtaining module is specifically configured to:
in a case that the RRC message comprises the RLF report, obtain the RLF report; or
in a case that the RRC message does not comprise the RLF report, send second indication information to the terminal according to the RLF indication information, wherein the second indication information is used to instruct the terminal to send the RLF report to the target network side device; and
receive the RLF report, wherein
the RLF indication information indicates that the RLF report is related to CHO.

28. The apparatus for processing CHO configuration information according to claim 27, wherein that the RLF report is related to CHO comprises at least one of the following:
the RLF report comprises a CHO-related parameter; and
the RLF report is generated after the terminal receives the CHO configuration information.

29. The apparatus for processing CHO configuration information according to claim 28, wherein the sending module is specifically configured to:
send the RLF report to the source network side device.

30. The apparatus for processing CHO configuration information according to claim 28, wherein the sending module is further configured to:
send a first notification message to the source network side device according to the RLF report; and
receive CHO-related information fed back by the source network side device, wherein the CHO-related information corresponds to the terminal.

31. The apparatus for processing CHO configuration information according to claim 30, wherein the sending module is specifically configured to:
send the first indication information to the source network side device, wherein the first indication information comprises the RLF report and at least one of the following:
the CHO-related information;
measurement information that corresponds to a CHO candidate cell and that is determined by the apparatus for processing CHO configuration information from neighboring cell measurement information in the RLF report according to the CHO candidate cell list; and
information obtained after the apparatus for processing CHO configuration information marks a neighboring cell of the CHO candidate cell in the RLF report according to the CHO candidate cell list.

32. The apparatus for processing CHO configuration information according to any one of claims 27 to 31, wherein a cell corresponding to the target network side device is any one of the following:
a first target cell, wherein the first target cell is a cell that remains connected after the terminal performs cell handover or RLF recovery, and the target cell is a cell in a CHO candidate cell; and
a second target cell, wherein the second target cell is a cell other than a cell corresponding to the source network side device and the first target cell.

33. The apparatus for processing CHO configuration information according to any one of claims 26 to 31, wherein the first indication information is any one of the following:
a failure indication message; and
a handover report.

34. An apparatus for triggering optimization of CHO configuration information, comprising:
a receiving module, configured to receive conditional handover CHO configuration information sent by a source network side device; and
a sending module, configured to send a radio resource control RRC message to a target network side device when the terminal encounters a radio link failure RLF, wherein
the RRC message comprises at least one of RLF indication information and an RLF report, and the RLF indication information and the RLF report are used to instruct to optimize CHO configuration information.

35. The apparatus for triggering optimization of CHO configuration information according to claim 34, wherein the sending module is specifically configured to:
send the RRC message to the target network side device in a case that the terminal encounters an RLF in a first cell before performing CHO and is reestablished to a second cell or performs RLF recovery in a third cell;
send the RRC message to the target network side device in a case that the terminal performs CHO to hand over from a first cell to a second cell and is reestablished to a third cell after encountering an RLF in the second cell; or
send the RRC message to the source network side device in a case that the terminal performs CHO to hand over from a first cell to a second cell and is reestablished to the first cell after encountering an RLF in the second cell, wherein
the first cell is a cell corresponding to the source network side device, the second cell is a cell corresponding to the target network side device, and the third cell is a cell corresponding to a third network side device.

36. The apparatus for triggering optimization of CHO configuration information according to claim 34, wherein in a case that the RRC message comprises the RLF indication information, the RLF indication information indicates that the RLF is related to CHO.

37. The apparatus for triggering optimization of CHO configuration information according to claim 36, wherein that the RLF report is related to CHO comprises at least one of the following:
the RLF report comprises a CHO-related parameter; and
the RLF report is generated after the terminal receives the CHO configuration information.

38. The apparatus for triggering optimization of CHO configuration information according to any one of claims 34 to 37, wherein the RRC message comprises at least one of the following:
an RRCReconfigurationComplete message;
an RRCSetupComplete message;
an RRCReestablishmentComplete message;
an RRCResumeComplete message; and
a UEInformationResponse message.

39. A network side device, comprising a processor, a memory, and a program or an instruction stored in the memory and executable on the processor, wherein the program or the instruction is executed by the processor to implement steps of the method for optimizing CHO configuration information according to any one of claims 1 to 6.

40. A network side device, comprising a processor, a memory, and a program or an instruction stored in the memory and executable on the processor, wherein the program or the instruction is executed by the processor to implement steps of the method for processing CHO configuration information according to any one of claims 7 to 14.

41. A terminal, comprising a processor, a memory, and a program or an instruction stored in the memory and executable on the processor, wherein the program or the instruction is executed by the processor to implement steps of the method for triggering optimization of CHO configuration information according to any one of claims 15 to 19.

42. A readable storage medium, wherein the readable storage medium stores a program or an instruction, and the program or the instruction is executed by a processor to implement steps of the method for optimizing CHO configuration information according to any one of claims 1 to 6, steps of the method for processing CHO configuration information according to any one of claims 7 to 14, or steps of the method for triggering optimization of CHO configuration information according to any one of claims 15 to 19.

43. A chip, wherein the chip comprises a processor and a communication interface, the communication interface is coupled to the processor, and the processor is configured to run a program or an instruction to implement steps of the method for optimizing CHO configuration information according to any one of claims 1 to 6, or steps of the method for processing CHO configuration information according to any one of claims 7 to 14, or steps of the method for triggering optimization of CHO configuration information according to any one of claims 15 to 19.

44. A computer program, wherein the computer program is stored in a non-transient storage medium, and the computer program is executed by at least one processor to implement steps of the method for optimizing CHO configuration information according to any one of claims 1 to 6, or steps of the method for processing CHO configuration information according to any one of claims 7 to 14, or steps of the method for triggering optimization of CHO configuration information according to any one of claims 15 to 19.
